(19) **Europäisches Patentamt / European Patent Office / Office européen des brevets**

(11) **EP 4 095 777 B1**

(12) **EUROPEAN PATENT SPECIFICATION**

(45) Date of publication and mention of the grant of the patent:
**18.06.2025 Bulletin 2025/25**

(21) Application number: **21708712.1**

(22) Date of filing: **21.01.2021**

(51) International Patent Classification (IPC):
**G06Q 10/08** *(2024.01)*

(52) Cooperative Patent Classification (CPC):
**G06Q 10/087**

(86) International application number:
**PCT/ES2021/070036**

(87) International publication number:
**WO 2021/148697 (29.07.2021 Gazette 2021/30)**

(54) **SYSTEM FOR MONITORING THE USE OF HAND TOOLS, HAND TOOL, AND METHOD FOR THE MONITORING OF HAND TOOLS**

SYSTEM ZUR ÜBERWACHUNG DER BENUTZUNG VON HANDWERKZEUGEN, HANDWERKZEUG UND VERFAHREN ZUR ÜBERWACHUNG VON HANDWERKZEUGEN

SYSTÈME POUR LA SURVEILLANCE DE L'UTILISATION D'OUTILS À MAIN, OUTIL À MAIN ET PROCÉDÉ DE SURVEILLANCE DE L'UTILISATION D'OUTILS À MAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2020 ES 202030046**

(43) Date of publication of application:
**30.11.2022 Bulletin 2022/48**

(73) Proprietor: **MARTINEZ Y GASCON, S.A.**
**02230 Madrigueras Albacete (ES)**

(72) Inventors:
- **MORALES HERRERA, Rafael**
  **02071 Albacete (ES)**
- **LUCAS BORJA, Alejandro**
  **02071 Albacete (ES)**
- **FERNÁNDEZ CABALLERO, Antonio**
  **02071 Albacete (ES)**
- **GONZÁLEZ LÓPEZ, Pascual**
  **02071 Albacete (ES)**
- **MARTÍNEZ MUÑOZ, Jonatan**
  **02071 Albacete (ES)**
- **IBÁÑEZ MARTÍNEZ, Rubén**
  **02230 Madrigueras (Albacete) (ES)**

(74) Representative: **Herrero & Asociados, S.L.**
**Edificio Aqua - Agustín de Foxá, 4-10**
**28036 Madrid (ES)**

(56) References cited:
| | |
|---|---|
| EP-A2- 1 690 648 | WO-A1-2005/108183 |
| WO-A1-2008/006342 | DE-A1- 102006 012 070 |
| KR-B1- 102 025 379 | US-A1- 2007 244 470 |
| US-A1- 2008 079 580 | US-A1- 2014 107 853 |
| US-A1- 2016 221 198 | US-A1- 2016 373 457 |
| US-A1- 2019 077 003 | US-A1- 2019 290 392 |
| US-B1- 6 366 206 | |

## Description

## Object of the invention

The present invention is directed to the field of hand tools and its object is both a system and a method that allows the monitoring of the effective use of one of them.

Specifically, the invention describes a tool that, by virtue of the system and method also described, allows the time of effective use of a hand tool to be recorded in an easy, safe and reliable way, as well as to avoid its incorrect use, either because it is used by an unauthorized person or because the tool is used improperly.

## Background of the invention

Hand tools are usually used to perform tasks on an object with one or both hands, making it possible to perform such tasks properly, simply, efficiently and safely. In some cases, carrying out such tasks without a tool or with an inappropriate tool is not possible and, in others, it may imply a fault in the tool itself, a much lower quality in the result on the object, a much greater effort to the user or even a risk that the user may suffer an accident.

Hand tools can be, for example, fixing tools, such as screwdrivers or wrenches, drilling tools, such as drills or punches, measuring tools, such as calipers, percussive tools, such as hammers, cutting tools, such as saws or knives, etc. Hand tools can be mechanized, such as power drills or screwdrivers.

Although this applies in any environment, including the domestic one, it is in the industrial or professional environment where the use that is given to hand tools, both in quantity and quality, is especially relevant. Thus, it is in these areas where it is necessary to establish protocols in order to guarantee safety and the proper use thereof in an effective and efficient way.

For example, it may happen that a tool is not returned to its storage site after the corresponding task has been performed and that it is left behind in the task place, lost or even stolen. It is therefore necessary to ensure that all the tools available at the beginning of the task are available again at the end of the task, not only because of the cost of replacing them, but also because they may suffer deterioration that results in poor execution of work or even may cause an accident to the operator who handles them.

On the other hand, on certain occasions it is especially necessary to monitor the degree of wear of hand tools, for example, when these are cutting tools such as knives, saws, etc. and thus carry out maintenance tasks, in that case sharpening. However, due to the fact that at an industrial or professional level the fleet of cutting tools is usually very high, it is difficult to follow the degree of wear of each one, so what is usually done is to send all the cutting tools to have them sharpened at the same time. This, of course, in addition to a high cost, means that some or many of these tools will be sharpened without actually needing it.

In addition, in such an environment, it is usually necessary to monitor the use that is given to the hand tool, that is, it is not enough to know if said tool is present or not in its workplace or storage, but if it is being used correctly or by the right person. This can be done by visual inspection and with the help of verification or check lists, labels, forms, etc., but it is expensive or difficult to apply in case the tool has to be used by multiple users, there are multiple tools or when multiple toolkits must be used simultaneously.

Therefore, when the number of hand tools to be monitored is high, checking the condition of all of them and maintaining or replacing only those tools that are not in a selectively suitable condition can be costly. This cost can be even higher than the cost of maintaining or restocking all tools after a while, regardless of whether some are in good or bad condition or whether some have been used more than others. This can especially occur in industrial or commercial applications where cutting tools, such as knives, are used, for example, in butchers, slaughterhouses, large fish markets, restaurants, etc.

Thus, in order to monitor the use of hand tools automatically, monitoring systems are now known in which there is a transponder device of the RFID type or radio frequency identification that is set to the tool and identifies it. The system has a detection device with a transponder reading device that reads said identification of the tool in communication with the transponder device. This makes it possible to detect the tool, that is to say, to determine its presence, when the identification of the tool is read by the reading device. This detection device is attached to the tool storage location where the tool should be housed or stored when not in use, and a signaling device signals the presence or absence of the appropriate hand tool uniquely assigned to the storage location. In this way, it is possible to monitor hand tools since each tool can be uniquely detected.

However, these systems only fulfill the function of monitoring the entry of tools into a given room or space, but they are not able of analyzing the real time during which said tools have been performing tasks themselves, in other words, screwing, cutting, punching, etc.

Thus, as an example, we can cite US20160221198, which describes a system that aims to improve detection or efficiency in the readings of tools (in this case, knives) that enter the room or workplace. For this, it is based on a high-frequency RFID system, that is, low wavelength, and therefore allows a greater detection range. This also has the drawback of high power consumption and complexity, which is greater the higher the set of tools to be monitored is, because each place or work or storage area requires its own power supply so that the respective detection device can continuously scan the presence or absence of transponder devices of the corresponding tools. In addition, another drawback derived from the high frequency use is the fact that, both the material of the handle and the user's own hand, attenuate the radio frequency signal and, therefore, the knife blade itself needs to act as an antenna, making the assembly process of the passive transponder element or RFID inserted in the handle difficult and expensive.

Another example is the one described in WO01/42991 which, even using the detection in the near field and therefore the low frequency, which leads to lower consumption since it is not necessary to use the knife blade as an antenna, requires that the user brings the tool close to touching the detection system so that it can be detected. In any case, again the monitoring of these tools only involves knowing that they enter or leave the room, warehouse or space in which the system is installed, not giving more information. The document US2019077003A1 discloses a generic system for monitoring the use of hand tools wherein the hand tool comprises at least one passive transponder.

That is why, in order to monitor and record the use of a tool in a complete way, it is necessary in the state of the art a system that not only unequivocally detects when said tool is held by a user, but also that the user has permission to do so, do it correctly and, in addition, be able to calculate the real time that said tool is being used for the function for which it is intended. In other words, a system that allows full traceability of tools when they are in the operational phase is necessary in the state of the art.

**Description of the invention**

Claims 1, 12 disclose the present invention. Preferred embodiments are disclosed in claims 2-11, 13-15.

The present invention solves all the problems of the aforementioned state of the art since it constitutes a system for monitoring hand tools that facilitates the real monitoring thereof while they are in the operational phase and, in short, their total traceability reliably, efficiently and economically, also offering a series of additional advantages not contemplated in the state of the art until now.

Specifically, the present invention includes a system that allows the collection of data from a hand cutting tool in order to know the actual use thereof, both in terms of wear hours and users who have used them. To do this, a new system is created that allows users and knives to be identified and to establish relationships of use between them. By means of this new system it is also possible to know the number of hours of use of a certain knife. This allows maintenance actions such as sharpening to be properly planned, which will improve the efficiency of the hand tool and its useful life. On the other hand, knowing who is using a certain knife in a given time helps to know the use that has been given to said knife or, what is the same, the number of hours that the operator assigned to that hand tool has used it. The system is even capable of storing training algorithms that allow the user to be notified when the maneuvers or movements carried out with the hand tool are not adequate, helping or guiding them to learn how to use it correctly.

In general, the proposed system comprises several components that interact with each other in an intelligent way:

- At least one hand tool comprising at least one passive transponder capable of being identified to be recognized automatically.
- A wearable electronic device for the hand and/or wrist of the user who is going to operate the hand tool, better known by the Anglo-Saxon term "wearable", which comprises a reader for the passive transponder of the hand tool and which is capable of recognizing that he/she is using said hand tool and processing the information on said use, as well as signaling and/or warning means.
- A computer equipment to store and process the information collected by the wearable electronic device, as well as software to manage a database with information related to, among other aspects, the permissions for the use of hand tools by users, historical data, etc.; and
- A passive user transponder readable by the wearable electronic device to link each user with said passive transponder.

Also in general, the method of the invention will start from a first phase in which the data relating to the hand tools, users and wearable electronic devices will be recorded in the computer equipment, as well as the relationship between them. For example, use permissions may be assigned for each of the hand tools so that not all users can use them, information that will be transferred to each of the wearable electronic devices.

Thus, at the beginning of a day or a specific operation, a user will choose any wearable electronic device and, through his/her passive user transponder, he/she will identify himself/herself so that while wearing it the information that is collected when using a hand tool is linked or assigned to him/her and not to another person when the transfer is made in the database of the computer equipment.

Once the user and the wearable electronic device have been linked, the user or operator will choose the most suitable hand tool, grasping it with the hand in which the wearable electronic device is carried, thus establishing the link between said device and the hand tool.

However, given that the information related to use permits has been previously transferred from the computer equipment to the wearable electronic device, when the user who is wearing it takes a hand tool for which he/she is not authorized, said device does not make the link and, on the contrary, it emits a signal or warning that may be visual, audible, vibrating or several of them at the same time and that forces said user to leave that hand tool and select the correct one.

This warning may also occur not only because the user takes a hand tool for which he/she does not have permission, but also, for example, because the system has detected that it needs maintenance because it has exceeded a previously set number of hours of use, for example, sharpening is necessary if the hand tool is a hand cutting tool.

This system also allows that, as long as permission is granted and there is no other restriction previously set by the system administrator, any operator can take any hand tool and any wearable electronic device, thus multiplying the possibilities of use. In other words, neither hand tools nor wearable electronic devices are assigned to any particular person in a way that only they can use them, but anyone can start using them simply by pairing them with their passive user transponder. Subsequently, as has been seen, the wearable electronic device itself will allow or not that the user who wears it can use a specific hand tool based on the data with which it has been loaded.

This form of operation has the clear advantage that any operator will be able to work with any wearable electronic device and any hand tool that is available, while if these were personal and non-transferable, their loss or failure would prevent the operator from working until another was assigned. In addition, it would force all operators to have their own, so, for example, in industries where there are several work shifts, it would force to multiply the number of hand tools and devices available, which would make the system extremely expensive.

**Brief description of the drawings**

In order to help a better understanding of the features of the invention, according to a preferred example of a practical embodiment thereof, a series of drawings is provided as an integral part of said description wherein the following has been represented with an illustrative and non-limiting nature:

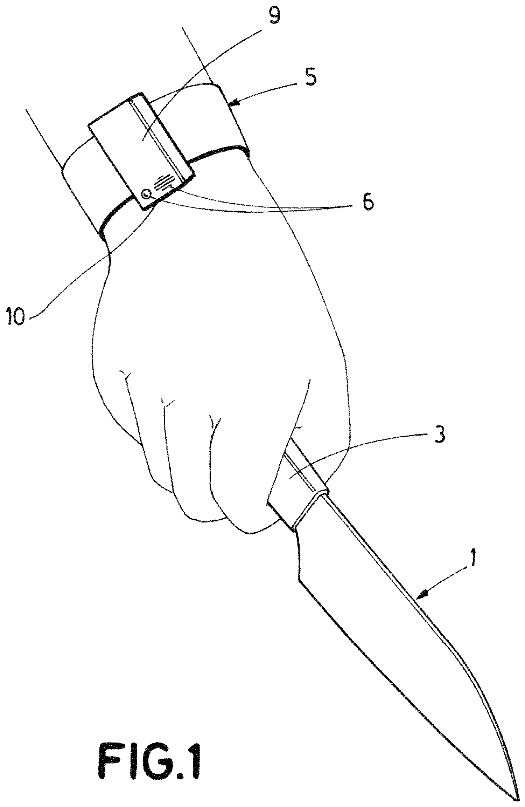

Figure 1.- Shows a schematic view of the hand tool, in this case a hand knife-type cutting tool, held by a user, who carries a wearable electronic device.

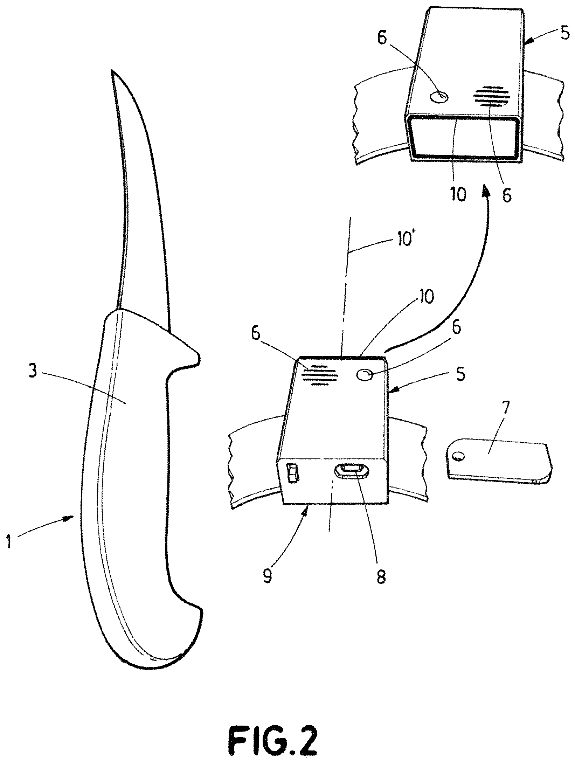

Figure 2.- Shows a schematic view of the system of the invention as a whole where both the hand tool and the electronic device wearable by the user, the user identification means and the user identifier are shown.

Figures 3, 5 and 7.- Show schematic views of how would be the placement of an RFID chip integrated in the handle of the hand tool, in this case a knife, to detect its use during the usual cutting operation for as many other embodiments of the wearable electronic device.

Figures 4, 6 and 8.- Show schematic views of how the placement of an RFID chip integrated in the handle of the hand tool, in this case a knife, would be to detect its use during the usual cutting operation for as many other embodiments of the wearable electronic device.

Figure 9.- Shows a sectioned perspective view of a hand tool, in this case a knife, in which the position and placement of two RFID chips integrated in its grip can be seen to detect its use both during usual cutting operation and during cutting-up operation.

**Detailed description of a preferred embodiment of the invention**

Next, a possible embodiment of the invention is described, shown in the figures. Specifically, as already said above, the system of the invention comprises:

- At least one hand tool (1) comprising at least one passive transponder (2) capable of being identified to be recognized automatically.

In the case shown in the figures, the hand tool (1) is a hand cutting tool and, more specifically, a knife, in such a way that the passive transponder (2), which according to the example is an RFID chip, is located inside the handle or grip (3) thereof.

According to an embodiment, this RFID chip can either be incorporated into the handle (3) once it has already been manufactured, or said handle (3) can be manufactured in such a way that it includes the corresponding holes to house it.

Thus, for example, in the first case, once the tool (1) has been manufactured, for example, the knife, a hole (4) can be made in the handle (3) by drilling, inserting the RFID chip and subsequently sealing them by any known system.

In the second case, for example, if the handle (3) is made of plastic material and its manufacturing mode is injection, the way to integrate said RFID chip during the manufacturing process itself would be to use an injection mold that includes the hole or holes (4) to house the RFID chip. Once the injection is finished, the RFID chip would be placed in the corresponding hole (4) and, finally, a second injection or overmolding would be carried out to seal the assembly so that it would remain watertight.

In any case, whatever the way to integrate the RFID chip or chips in the handle (3) of the tool (1), it will work at low frequency.

More specifically, as it is known, RFID radio frequency identification technology is classified by its working frequency, there being 4 different types of technologies:

1.- LF or Low Frequency, which works at 125 KHz or 134.5 KHz.

2.- HF or High Frequency, which works at 13.56 MHz.

3.- UHF or ultra high frequency, which works at 868 MHz to 956 MHz.

4.- MWF or Microwave Frequency, which works at 2.45 GHz.

For the system of the invention, RFID is used in its low frequency band or LF (125 or 134.5 KHz). In this case, since they are very low frequencies, the wavelengths (Λ) associated with these frequencies will be very high values, specifically:

$$Λ=c/f=3e8/125e3=2400 \text{ meters}=2.4 \text{ km}$$

wherein:

c represents the speed of light in the medium in m/sec; and

f represents the operating frequency in Hz

Therefore, the antennas used in the solution are working in their near field zone (near field region).

When working in the near field zone, the near field signals generated by the antennas are attenuated based on the following expression:

$$\text{Attenuation}= 1/(r^3) \text{ y } 1/(r^2)$$

wherein:

r represents the distance between the reading antenna (wearable electronic device) and the receiving antenna (passive RFID transponder inside the handle of the tool, in this case the knife).

Therefore, their amplitude decreases very quickly and only knives that are very close can be identified, that is, knives that the user grasps with the same hand in which the wearable electronic device is worn. In this way, possible interferences or linkages of knives that were also very close, for example, on the same work table, or those carried by another person passing by are eliminated.

- A wearable electronic device (5) for the hand and/or wrist of the user who is going to handle the hand tool (1), better known by the Anglo-Saxon term "wearable", which comprises a reader for the passive transponder (2) of the hand tool (1) and that it is capable of recognizing that he/she is using said hand tool (1) and processing the information on said use, in addition to signaling and/or warning means (6).

For the case shown in the figures, said wearable electronic device (5) is a bracelet, but it could also be a watch or similar device, a wrist strap or a glove incorporating the necessary elements described below.

Specifically, the wearable electronic device (5), in this case the bracelet shown in the figures, comprises a housing (9) within which it in turn comprises:

- An RFID reader capable of reading both the RFID chip integrated in the handle (3) of the hand tool (1) and the passive user transponder (7).

- An internal memory where the bracelet will store a record that will include both the identification or ID numbers of the user and those of the hand tool (1), as well as the data on the use of the knife: detection start time, end time detection.

- At least one battery

- The means of signaling and/or warning (6), which in turn include:

  ○ One or more LED diodes or data display screens to show visual information (discharged battery, unauthorized knife, etc.).
  ○ A vibro-tactile actuator to transmit haptic information and alert the user about different situations such as lack of permission, poor condition of the hand tool, etc.
  ○ An acoustic warning device.

- A movement sensor that will set the bracelet in battery saving mode when it does not detect movement.

- Additionally, it may comprise, depending on the needs or functionalities intended to be covered, inertial sensors, gyroscopes, accelerometers, magnetometers or even barometers.

  All of them shall be implemented in such a way that the information they provide is stored in the system, for example, to evaluate the way users carry out tasks, to establish routines of use, etc. Additionally, movement thresholds may be used to confirm that the identified knife is being actively used and not to confuse actual operating time with simple secondary or accessory movements.

- Connection means (8) for charging the battery and for connecting to the computer equipment, for example, through a USB type connector. Likewise, according to another possible alternative, means of connection (8) to the computer equipment may be wireless.

  In any case, these connection means (8) will allow the computer system to register, with the desired regularity, all the data obtained from each operation by each user, populating the database thereof.

- A computer equipment not represented in the figures, to store and process the information collected by the wearable electronic device (5), as well as software to manage a database with information related to, among other aspects, permits for using hand tools by users, historical data, etc .; and
This computing device could be constituted, for example, by a laptop, although it could also be any device with sufficient storage and processing capacity on which the appropriate software could run, such as a tablet, a mobile phone, etc.

- A passive user transponder (7) readable by the wearable electronic device (5) to link each user with said passive user transponder (7).

As mentioned above, the user will choose any wearable electronic device (5) and, through his/her passive user transponder (7), he/she will identify himself/-herself so that while wearing it the information that is collected when using a hand tool (1) is linked or assigned to him/her and not to another person when the transfer is made in the database of the computer equipment.

Likewise, said link will also allow the system, through the signaling and/or warning means (6) of the wearable electronic device (5), to warn by means of a sound, vibrating signal or both at the same time in the event that the user is not authorized to use this hand tool (1) or it requires maintenance.

In any case, as has already been said, the system and method of the invention base their functionality and usefulness on the fact that they are capable of detecting the effective use of the hand tool (1), that is, the time during which the operation is carried out, cutting operation in the case of the knife in the exemplary embodiment, not the time during which the operator simply holds or transports it.

To this end, it is necessary that the wearable electronic device (5) interact with the RFID chip or chips integrated in the handle (3) of the hand tool (1) effectively depending on the type of movement or operation to be monitored.

In other words, in order to achieve this effective monitoring of the use of the hand tool (1), the arrangement of the antenna (10) of the wearable electronic device will adopt with respect to the antenna of the passive transponder (2), for example, the RFID chip, a position such that the reading electromagnetic waves are maximum and therefore the polarization of both radiating elements or antennas is optimal.

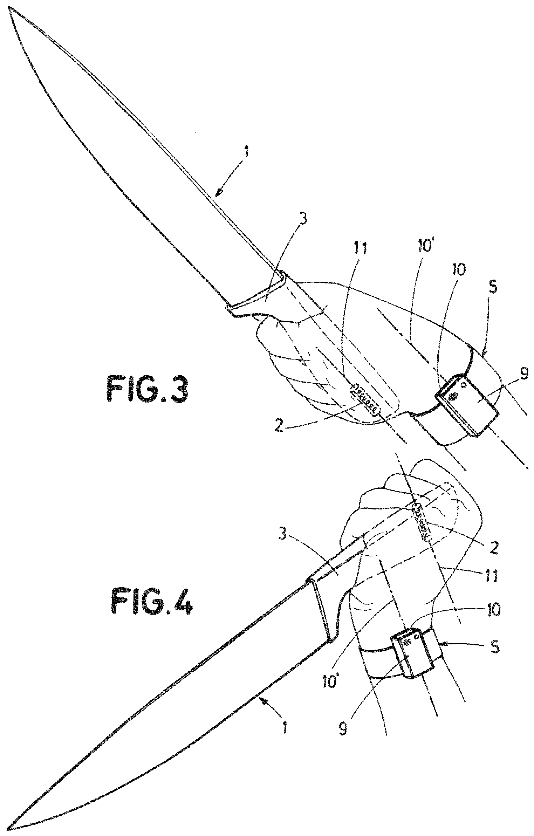

More specifically, as can be seen in Figures 3 to 8, this will be possible when the axis (10') that passes through the center of the loop formed by the antenna (10) of the wearable electronic device (5) and the axis (11) that passes through the center of the loop formed by the antenna of the passive transponder (2), the RFID chip, are parallel, substantially parallel or, at least, as parallel as possible.

The shape adopted by the wearable electronic device could be any, such as a prismatic body, for example, a rectangular prism, an elliptical cylinder, a wedge or non-wedge portion thereof, etc. However, to illustrate a possible concrete embodiment of the invention, Figures 3 to 8 show different configurations or arrangements for the antenna (10) of the wearable electronic device (5) for the particular case that it is an orthohedron, that is, an orthogonal rectangular prism or "shoe or match box" that has 6 faces, equal two by two, in which said equal faces are opposite each other.

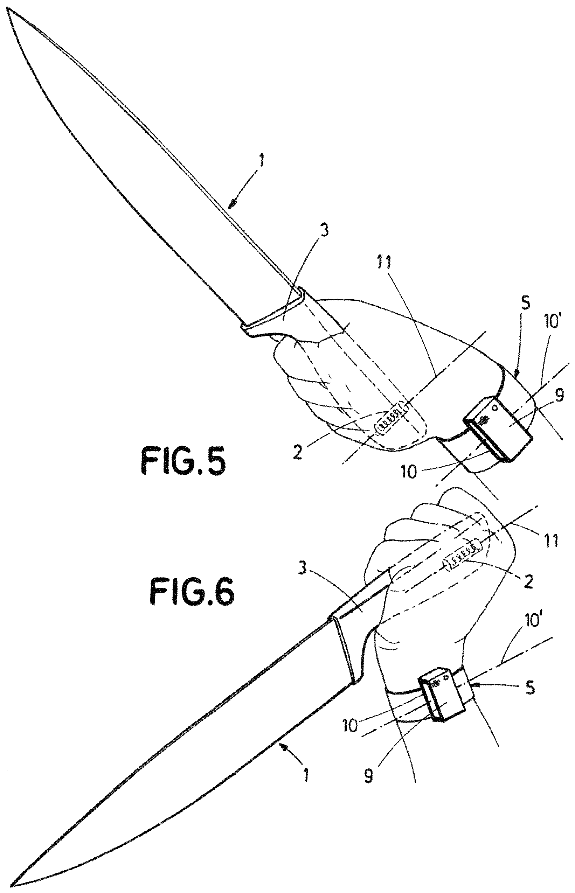

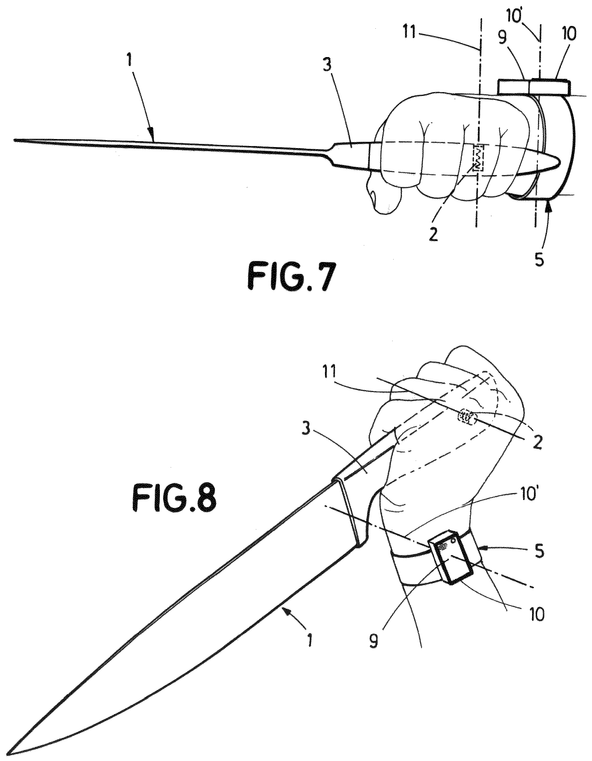

Thus, in the embodiment shown in Figures 3 and 4, the antenna would be formed by a loop located on the perimeter of one of the two smaller faces. In Figures 5 and 6 the antenna would be formed by a loop located on the perimeter of one of the two medium-sized faces and, finally, in Figures 7 and 8 the antenna would be formed by a loop located on the perimeter of one of the two larger faces

It should be noted that, when speaking of the loop formed by the antenna, the present invention also refers to the so-called "loop antennas", which have a certain number of windings or numbers of turns of copper wire, said number of turns determining the electromagnetic field generated in such a way that the greater the number, the greater the field. Thus, when speaking of the axis that passes through the center of the loop, the present invention refers to the axis that passes through the center of the loop formed by the antenna, regardless of the number of turns or windings it has.

Specifically, Figure 3 shows the position of the passive transponder (2), that is, the RFID chip for this embodiment, inside the handle (3) of the hand tool (1), in this case a hand cutting tool such as a knife, If what you want to detect are the usual cutting operations in which the knife is handled as shown in said figure and the antenna (10) of the wearable electronic device (5) is located on the perimeter of one of the two smaller faces.

More specifically, the position of said RFID chip will be such that it is arranged longitudinally with respect to the handle (3), that is, along it or, in other words, parallel and longitudinal with respect to the active or useful part of the hand tool (1), in this case the knife blade.

Thus, as can be seen in said figure 3, during this specific operation, the user's hand grasps the handle (3) of the knife so that the axis (10') of the loop of the antenna (10) of the wearable electronic device ( 5) is arranged parallel or substantially parallel with respect to the axis (11) of the loop formed by the antenna of the RFID chip integrated in the handle (3), thus achieving that for that position of grip of the knife by the user the reading electromagnetic waves are maximum and therefore the polarization of both radiating elements is optimal.

On the other hand, figure 4 shows the position of the passive transponder (2), that is, the RFID chip for this embodiment, in the handle (3) of the hand tool (1), in this case a knife, If what you want to detect are the cutting-up operations, which, as can be seen in said figure 4, require that it be held or grasped in a completely different way than if it is used for cutting and the antenna (10) of the wearable electronic device (5) is located on the perimeter of one of the two smaller faces.

More specifically, the position of said RFID chip in this case will be such that it is arranged transversely with respect to the handle (3), that is, across it or, in other words, parallel and transversely with respect to the knife blade.

Thus, as can be seen in figure 4, during this specific operation, the user's hand grasps the handle (3) of the knife so that the axis (10') of the loop of the antenna (10) of the wearable electronic device ( 5) is arranged parallel or substantially parallel with respect to the axis (11) of the loop formed by the antenna of the RFID chip, thus achieving that for that position of grip of the knife by the user the reading electromagnetic waves are maximum and therefore the polarization of both radiating elements is optimal.

On the other hand, figure 5 shows the position of the passive transponder (2) in the handle (3) of the hand tool (1) if what you want to detect are the usual cutting operations in which the knife is handled as shown in said figure and the antenna (10) of the wearable electronic device (5) is located on the perimeter of one of the two intermediate faces.

More specifically, the position of said RFID chip will be such that it is arranged transversely with respect to the handle (3), that is, across it or, in other words, parallel and transversely with respect to the active useful part of the hand tool (1), in this case the knife blade.

Thus, as can be seen in said figure 5, during this specific operation, the user's hand grips the handle (3) of the knife so that the axis (10') of the loop of the antenna (10) of the wearable electronic device (5) is arranged parallel or substantially parallel with respect to the axis (11) of the loop formed by the antenna of the RFID chip integrated in the handle (3), thus achieving that for that position of grip of the knife by the user the reading waves electromagnetic are maximum and therefore the polarization of both radiating elements is optimal.

On the other hand, figure 6 shows the position of the passive transponder (2) in the handle (3) of the hand tool (1) if what you want to detect are the cutting-up operations, in which the knife is handled as shown in said figure, and the antenna (10) of the wearable electronic device (5) is located on the perimeter of one of the two intermediate faces.

More specifically, the position of said RFID chip will be such that it is arranged longitudinally with respect to the handle (3), that is, along it or, in other words, parallel and longitudinal with respect to the active or useful part of the hand tool (1), in this case the knife blade.

Thus, as can be seen in said figure 6, during this specific operation, the user's hand grasps the handle (3) of the knife so that the axis (10') of the loop of the antenna (10) of the wearable electronic device ( 5) is arranged parallel or substantially parallel with respect to the axis (11) of the loop formed by the antenna of the RFID chip integrated in the handle (3), thus achieving that for that position of grip of the knife by the user the reading waves electromagnetic are maximum and therefore the polarization of both radiating elements is optimal.

Finally, Figures 7 and 8 show the position of the passive transponder (2) in the handle (3) of the hand tool (1) to detect both the usual cutting operations and the cutting-up ones and the antenna (10) of the wearable electronic device (5) is located on the perimeter of one of the two larger faces.

More specifically, the position of said RFID chip will be such that it is arranged so that it passes through the handle (3) in the same way as a screw that would hold the two halves thereof or, in other words, orthogonally with respect to the active or useful part of the hand tool (1), in this case the knife blade.

Thus, whether the user's hand grasps the handle (3) to carry out a usual cutting operation as in figure 7 or if the user does so to carry out a cutting-up operation as in figure 8, the axis (10') of the loop of the antenna (10) of the wearable electronic device (5) is arranged parallel or substantially parallel with respect to the axis (11) of the loop formed by the antenna of the RFID chip integrated in the handle (3), thus achieving that for both situations of grip of the knife by the user the reading electromagnetic waves are maximum and therefore the polarization of both radiating elements is optimal.

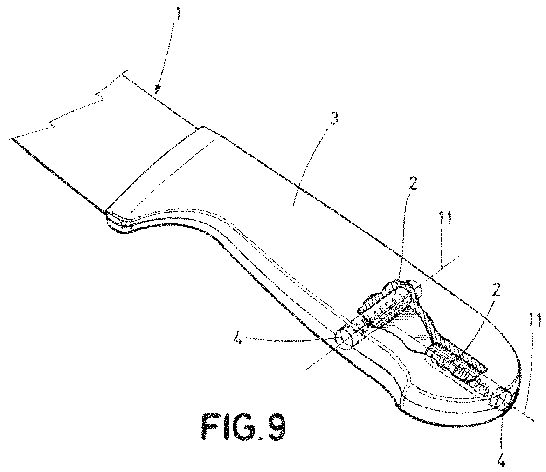

On the other hand, figure 9 shows an example of embodiment of the invention in which it is possible, indistinctly, both the detection of the use of a knife for the usual or traditional cutting and for its use for the cutting-up operation when the antenna (10) of the wearable electronic device (5) is on any of the smaller or intermediate faces.

To this end, the handle (3) of the hand tool (1) will comprise two passive transponders (2), for the case of the example two RFID chips, one of them arranged across the width, that is, transversely to the handle ( 3) and another arranged along, that is, longitudinally with respect to the handle (3) as shown in said figure.

Thus, whether the knife is used in the usual way for cutting or cutting-up, the axis (11) of the loop of one of the two RFID chips, the one located longitudinally or the one located transversely with respect to the handle (3), the one that is placed in parallel with respect to the axis (10') of the loop of the antenna (10) of the wearable electronic device (5), only this type of movement is monitored and the other RFID chip does not have any effect because the axis (11) of the loop formed by its antenna positioned perpendicular to the axis (10') of the loop of the antenna (10) of the wearable electronic device (5), which will not be electromagnetically excited.

Finally, there would still be another possible embodiment, not represented, in which it would be possible to detect the use of the knife either for the usual cut or for the cutting-up, no matter on which faces (smaller, intermediate or larger) the antenna (10) of the wearable electronic device (5) was located.

Specifically, such an embodiment would be possible if a third RFID chip placed orthogonally with respect to the handle (3) of the knife were added to the embodiment shown in Figure 9. Thus, by means of this embodiment, regardless of the position of the antenna (10) in the wearable electronic device (5) and how the user handled the knife, there would always be some axis (11) of one of the three RFID chips integrated in the handle that would be parallel or substantially parallel to the axis (10') of said antenna (10) and the movement could be monitored.

Regarding a possible workflow or method of monitoring a hand tool, it could be the following:

a. The user chooses a wearable electronic device (5) as shown in the figures and places it on the wrist.

b. The wearable electronic device (5) detects movement and exits from idle mode.

c. The user identifies himself/herself with his/her personal passive user transponder (7) by bringing it closer to the wearable electronic device (5), from which time both are linked in the memory of said wearable electronic device (5).

In the event that identification does not occur, the wearable electronic device will alert of this fact after a certain time after detecting movement, for example, several seconds.

d. The user chooses a hand tool (1) and grabs it with the hand in which the wearable electronic device (5) is placed, which through its antenna (10) reads the passive transponder (2) integrated inside the its handle (3), identifying said hand tool (1) through a local inventory and records the session start time in its internal memory.

e. The wearable electronic device (5) checks various conditions through the data in its internal memory, such as:

▪ Permission to use the hand tool (1) by the current user;

▪ Need for maintenance of the hand tool (1).

These conditions will be noted later in their session history and, if necessary, a visual, sound and/or vibrating alert will be shown to the user through their signaling and/or warning means (6); for the user to choose another hand tool (1).

f. The wearable electronic device (5) periodically checks (according to a possible example of embodiment around 1 second) that it can read a passive transponder (2) of the hand tool (1) and will record the movement data through the sensors if so it is required.

g. When the wearable electronic device (5) cannot read any passive transponder (2) of the hand tool (1) for a predetermined period (according to the embodiment, several seconds) the wearable electronic device (5) will record the time of end of use of hand tool (1) in its history.

h. At the end of the day, the user removes the wearable electronic device (5), which, after a specified time without motion detection, for example, a few minutes, will no longer be associated with said user and will go into idle mode.

i. Finally, either the same user or another person in charge of maintaining the system connects the wearable electronic device (5) to a USB port of the computer equipment and, if it has not been done before by the previous step, the user is disconnected. The wearable electronic device (5) charges its battery and synchronizes its internal memory with the computer equipment, downloading the history data and updating the local inventory.

j. According to a possible alternative, instead of the wearable electronic device (5) being physically connected to the computer equipment, it can be connected to a charging base which in turn will connect to the computer equipment wirelessly by any known means such as Bluetooth or Wifi for the wearable electronic device (5) to synchronize its internal memory with the computer equipment by downloading the history data and updating the local inventory.

## Claims

1. System for monitoring the use of hand tools (1) comprising:

- At least one hand tool (1) which in turn comprises at least one passive transponder (2) integrated inside its handle (3);
- A passive user transponder (7) to link each user with said passive user transponder (7);
- A wearable electronic device (5) adaptable to the hand and/or wrist of the user who is going to handle the hand tool (1) and which includes a reader for reading the passive transponder (2) of the hand tool (1) and the passive user transponder (7); and
- A computer equipment to store and process the information collected by the wearable electronic device (5);

and wherein the passive transponder (2) of the hand tool (1), the passive user transponder (7) and the reader of said passive transponders that comprises the wearable electronic device (5) are of the type that use radio frequency identification technology (RFID) and work at the low frequency of 125 KHz or 134.5 KHz and in the near field.

2. System for monitoring the use of hand tools (1) according to claim 1, **characterized in that** the arrangement of the antenna (10) of the wearable electronic device (5) is such that, when the axis (10') passes through the center of its loop is parallel or substantially parallel to the axis (11) that passes through the center of the loop formed by the antenna of the passive transponder (2) integrated in the handle (3) of the hand tool (1), the reading electromagnetic waves are maximum.

3. System for monitoring the use of hand tools (1) according to any of claims 1 or 2, **characterized in that** the hand tool (1) comprises at least one passive transponder (2) integrated in its handle (3) and located longitudinally with respect to it.

4. System for monitoring the use of hand tools (1) according to any of claims 1 or 2, **characterized in that** the hand tool (1) comprises at least one passive transponder (2) integrated in its handle (3) and located transversely with respect to it.

5. System for monitoring the use of hand tools (1) according to any of the preceding claims, **characterized in that** the hand tool (1) comprises a passive transponder (2) integrated in its handle (3) located longitudinally with respect to it and a passive transponder (2) integrated in its handle (3) located transversely with respect to it.

6. System (1) according to any of the preceding claims, **characterized in that** it comprises a passive transponder (2) integrated in its handle (3) positioned orthogonal to it.

7. System for monitoring the use of hand tools (1) according to any of the preceding claims, **characterized in that** the wearable electronic device (5) comprises:

   - signaling and/or warning means (6);
   - at least one battery;
   - an internal memory where to store both the identification data of the hand tool (1) and the users, as well as the data collected during the use of said hand tool (1); and
   - connection means (8) for charging the battery and for connecting to the computer equipment

8. System for monitoring the use of hand tools (1) according to claim 7, **characterized in that** the signaling and/or warning means (6) comprise:

   - At least one led diode or data display screen to display visual information; and
   - A vibro-tactile actuator to transmit haptic information and alert the user about different situations such as lack of permission, poor condition of the hand tool and optionally

9. System for monitoring the use of hand tools (1) according to any of the previous claims, **characterized in that** the wearable electronic device (5) comprises at least one sensor selected from the group of motion, inertial, gyroscopes, accelerometers, magnetometers or barometers sensors.

10. System for monitoring the use of hand tools (1) according to any of the preceding claims, **characterized in that** the hand tool (1) is a hand cutting tool.

11. System for monitoring the use of hand tools (1) according to claim 10, **characterized in that** the hand cutting tool is a knife.

12. Method of monitoring the use of hand tools (1) that uses the system of claims 1 to 11 **characterized in that** it comprises the steps of:

   a. Choice of a wearable electronic device (5) by the user and placement in the hand with which to handle the tool;
   b. Identification of the wearable electronic device (5) chosen with a passive personal user transponder (7) so that both are linked in the memory of said wearable electronic device (5);
   c. Choice of a hand tool (1) by the user and grasp with the hand in which the wearable electronic device (5) is placed, so that the latter reads the passive transponder (2) integrated inside its handle (3 ), identifies said hand tool (1) through its local inventory and records the login time in its internal memory;
   d. Verification of permits of use and maintenance needs of the hand tool (1) selected by the wearable electronic device (5) through the data in its internal memory and issuance of a warning signal through its signaling and/or warning means (6) if the hand tool (1) cannot be used;
   e. If it can be used, periodic verification by the wearable electronic device (5) that it can read a passive transponder (2) of the hand tool (1), recording the time of end of use of the hand tool (1) when this is not possible; and
   f. Motion detection by the wearable electronic device (5) to detect when the user has removed it so that, if said movement does not occur for a specified time, it is no longer associated with the passive user transponder (7) of said user and enters into an idle mode.

13. Method of monitoring tools according to claim 12, **characterized in that** while the hand tool (1) is being used, the wearable electronic device (5) records its movement data.

14. Method of monitoring tools according to claim 12 or 13, **characterized in that** once the work is finished, the wearable electronic device (5) is connected to a port of the computer equipment to charge its battery and synchronize its internal memory with the computer equipment, downloading the history data and updating the local inventory.

15. Method of monitoring tools according to claim 12 or 13, **characterized in that** once the work is finished the wearable electronic device (5) is connected to a charging base which in turn is connected to the computer equipment wirelessly so that the wearable electronic device (5) synchronize its internal memory with the computer equipment by downloading the history data and updating the local inventory.

**Patentansprüche**

1. System zur Überwachung der Verwendung von Handwerkzeugen (1), umfassend:

   - mindestens ein Handwerkzeug (1), das wiederum mindestens einen in seinen Griff (3) integrierten passiven Transponder (2) umfasst;
   - einen passiven Nutzertransponder (7) zur Verknüpfung jedes Nutzers mit dem passiven Nutzertransponder (7);
   - eine tragbare elektronische Vorrichtung (5), die an die Hand und/oder das Handgelenk des Nutzers, der das Handwerkzeug (1) bedienen wird, anpassbar ist und eine Ausleseeinrichtung zum Auslesen des passiven Transponders (2) des Handwerkzeugs (1) und des passiven Nutzertransponders (7) umfasst; und
   - eine Recheneinrichtung zum Speichern und Verarbeiten der durch die tragbare elektronische Vorrichtung (5) gesammelten Informationen;

   und wobei der passive Transponder (2) des Handwerkzeugs (1), der passive Nutzertransponder (7) und die von der tragbaren elektronischen Vorrichtung (5) umfasste Ausleseeinrichtung der passiven Transponder von der Art sind, die Radiofrequenzidentifikationstechnologie (RFID) verwendet und bei der Niederfrequenz von 125 kHz oder 134,5 kHz und im Nahfeld arbeitet.

2. System zur Überwachung der Verwendung von Handwerkzeugen (1) nach Anspruch 1, **dadurch gekennzeichnet, dass** die Antenne (10) der tragbaren elektronischen Vorrichtung (5) derart angeordnet ist, dass, wenn die durch den Mittelpunkt ihrer Schleife verlaufende Achse (10') parallel oder im Wesentlichen parallel zu der Achse (11) ist, die durch den Mittelpunkt der von der Antenne des in den Griff (3) des Handwerkzeugs (1) integrierten passiven Transponders (2) gebildeten Schleife verläuft, die elektromagnetischen Auslesewellen maximal sind.

3. System zur Überwachung der Verwendung von Handwerkzeugen (1) nach einem der Ansprüche 1 oder 2, **dadurch gekennzeichnet, dass** das Handwerkzeug (1) mindestens einen in seinen Griff (3) integrierten und längs zu diesem angeordneten passiven Transponder (2) umfasst.

4. System zur Überwachung der Verwendung von Handwerkzeugen (1) nach einem der Ansprüche 1 oder 2, **dadurch gekennzeichnet, dass** das Handwerkzeug (1) mindestens einen in seinen Griff (3) integrierten und quer zu diesem angeordneten passiven Transponder (2) umfasst.

5. System zur Überwachung der Verwendung von Handwerkzeugen (1) nach einem der vorhergehenden Ansprüche, **dadurch gekennzeichnet, dass** das Handwerkzeug (1) einen in seinen Griff (3) integrierten und längs zu diesem angeordneten passiven Transponder (2) und einen in seinen Griff (3) integrierten und quer zu diesem angeordneten passiven Transponder (2) umfasst.

6. System (1) nach einem der vorhergehenden Ansprüche, **dadurch gekennzeichnet, dass** das System einen in seinen Griff (3) integrierten und orthogonal zu diesem angeordneten passiven Transponder (2) umfasst.

7. System zur Überwachung der Verwendung von Handwerkzeugen (1) nach einem der vorhergehenden Ansprüche, **dadurch gekennzeichnet, dass** die tragbare elektronische Vorrichtung (5) Folgendes umfasst:

   - Signalgeber- und/oder Warnmittel (6);
   - mindestens eine Batterie;
   - einen internen Speicher, auf dem die Identifikationsdaten sowohl des Handwerkzeugs (1) als auch der Nutzer sowie die während der Verwendung des Handwerkzeugs (1) gesammelten Daten speicherbar sind; und
   - Verbindungsmittel (8) zum Laden der Batterie und zum Verbinden mit der Recheneinrichtung.

8. System zur Überwachung der Verwendung von Handwerkzeugen (1) nach Anspruch 7, **dadurch gekennzeichnet, dass** die Signalgeber- und/oder Warnmittel (6) Folgendes umfassen:

   - mindestens einen LED- oder Datenanzeigebildschirm zur Anzeige von visuellen Informationen; und
   - einen vibrotaktilen Aktor zur Übertragung haptischer Informationen und zur Benachrichtigung des Nutzers über unterschiedliche Situationen, wie fehlende Berechtigung, einen schlechten Zustand des Handwerkzeugs und wahlweise

9. System zur Überwachung der Verwendung von Handwerkzeugen (1) nach einem der vorhergehenden Ansprüche, **dadurch gekennzeichnet, dass** die tragbare elektronische Vorrichtung (5) mindestens einen Sensor umfasst, der aus der Gruppe mit Bewegungssensoren, Trägheitssensoren, Gyroskopen, Beschleunigungsmessern, Magnetometern oder Barometern ausgewählt ist.

10. System zur Überwachung der Verwendung von Handwerkzeugen (1) nach einem der vorhergehenden Ansprüche, **dadurch gekennzeichnet, dass** das Handwerkzeug (1) ein Handschneidwerkzeug ist.

11. System zur Überwachung der Verwendung von Handwerkzeugen (1) nach Anspruch 10, **dadurch gekennzeichnet, dass** das Handwerkzeug (1) ein Messer ist.

12. Verfahren zur Überwachung der Verwendung von Handwerkzeugen (1) mittels des Systems nach den Ansprüchen 1 bis 11, **dadurch gekennzeichnet, dass** das Verfahren die folgenden Schritte umfasst:

    a. Wählen einer tragbaren elektronischen Vorrichtung (5) durch den Nutzer und Platzieren derselben an der Hand, mit der das Werkzeug verwendet werden soll;
    b. Identifizieren der gewählten tragbaren elektronischen Vorrichtung (5) mittels eines passiven persönlichen Nutzertransponders (7), so dass beide in dem Speicher der tragbaren elektronischen Vorrichtung (5) verknüpft werden;
    c. Wählen eines Handwerkzeugs (1) durch den Nutzer und Ergreifen desselben mit der Hand, an welcher die tragbare elektronische Vorrichtung (5) platziert ist, so dass Letztere den in dessen Griff (3) integrierten passiven Transponder (1) ausliest, das Handwerkzeug (1) durch seinen lokalen Speicherinhalt identifiziert und die Login-Zeit in ihrem internen Speicher aufzeichnet;
    d. Verifizieren von Verwendungsberechtigungen und eines Wartungsbedarfs des gewählten Handwerkzeugs (1) durch die tragbare elektronische Vorrichtung (5) anhand der Daten in ihrem internen Speicher und Ausgeben eines Warnsignals durch ihre Signalgeber- und/oder Warnmittel (6), wenn das Handwerkzeug (1) nicht verwendet werden kann;
    e. wenn das Handwerkzeug verwendet werden kann, periodisches Verifizieren durch die tragbare elektronische Vorrichtung (5), dass sie einen passiven Transponder (2) des Handwerkzeugs (1) auslesen kann, wobei die Endzeit der Benutzung des Handwerkzeugs (1) aufgezeichnet wird, wenn dies nicht möglich ist; und

    f. Erkennen von Bewegungen durch die tragbare elektronische Vorrichtung (5) zur Erkennung, wenn ein Nutzer sie abgelegt hat, so dass sie bei Ausbleiben von Bewegungen über einen vorgegebenen Zeitraum nicht länger dem passiven Nutzertransponder (7) des Nutzers zugeordnet ist und in einen Ruhemodus übergeht.

13. Verfahren zur Überwachung von Werkzeugen nach Anspruch 12, **dadurch gekennzeichnet, dass** die tragbare elektronische Vorrichtung (5) die Bewegungen des Handwerkzeugs (1) während dessen Verwendung aufzeichnet.

14. Verfahren zur Überwachung von Werkzeugen nach Anspruch 12 oder 13, **dadurch gekennzeichnet, dass** die tragbare elektronische Vorrichtung (5) nach Beendigung der Arbeiten mit einem Anschluss der Recheneinrichtung verbunden wird, um ihre Batterie zu laden und ihren internen Speicher durch Herunterladen der Verlaufsdaten und Aktualisieren des lokalen Speicherinhalts mit der Recheneinrichtung zu synchronisieren.

15. Verfahren zur Überwachung von Werkzeugen nach Anspruch 12 oder 13, **dadurch gekennzeichnet, dass** die tragbare elektronische Vorrichtung (5) nach Beendigung der Arbeiten mit einer Ladestation verbunden wird, die wiederum drahtlos mit der Recheneinrichtung verbunden ist, so dass die tragbare elektronische Vorrichtung (5) ihren internen Speicher durch Herunterladen der Verlaufsdaten und Aktualisieren des lokalen Speicherinhalts mit der Recheneinrichtung synchronisiert.

**Revendications**

1. Système pour surveiller l'utilisation d'outils à main (1), comprenant:

    - au moins un outil à main (1) qui, à son tour, comprend au moins un transpondeur passif (2) intégré à l'intérieur de son manche (3) ;
    - un transpondeur d'utilisateur passif (7) pour lier chaque utilisateur avec ledit transpondeur d'utilisateur passif (7) ;
    - un dispositif électronique pouvant être porté (5) qui peut être adapté sur la main et/ou le poignet de l'utilisateur qui va manipuler l'outil à main (1) et qui inclut un lecteur pour lire le transpondeur passif (2) de l'outil à main (1) et le transpondeur d'utilisateur passif (7) ; et
    - un équipement informatique pour stocker et traiter l'information qui est collectée par le dispositif électronique pouvant être porté (5) ; et
    - dans lequel le transpondeur passif (2) de l'outil à main (1), le transpondeur d'utilisateur passif (7) et le lecteur desdits transpondeurs passifs constituant le dispositif électronique pouvant être porté (5) sont du type selon lequel ils utilisent une technologie d'identification radiofréquence (RFID) et ils fonctionnent à la basse fréquence de 125 KHz ou de 134,5 KHz et dans le champ proche.

2. Système pour surveiller l'utilisation d'outils à main (1) selon la revendication 1, **caractérisé en ce que** l'agencement de l'antenne (10) du dispositif électronique pouvant être porté (5) est tel que, lorsque l'axe (10') qui passe par le centre de sa boucle est parallèle ou sensiblement parallèle à l'axe (11) qui passe par le centre de la boucle qui est formée par l'antenne du transpondeur passif (2) qui est intégré dans le manche (3) de l'outil à main (1), les ondes électromagnétiques de lecture sont maximum.

3. Système pour surveiller l'utilisation d'outils à main (1) selon l'une quelconque des revendications 1 ou 2, **caractérisé en ce que** l'outil à main (1) comprend au moins un transpondeur passif (2) qui est intégré dans son manche (3) et qui est localisé de façon longitudinale par rapport à celui-ci.

4. Système pour surveiller l'utilisation d'outils à main (1) selon l'une quelconque des revendications 1 ou 2, **caractérisé en ce que** l'outil à main (1) comprend au moins un transpondeur passif (2) qui est intégré dans son manche (3) et qui est localisé de façon transversale par rapport à celui-ci.

5. Système pour surveiller l'utilisation d'outils à main (1) selon l'une quelconque des revendications précédentes, **caractérisé en ce que** l'outil à main (1) comprend un transpondeur passif (2) qui est intégré dans son manche (3) et qui est localisé de façon longitudinale par rapport à celui-ci et un transpondeur passif (2) qui est intégré dans son manche (3) et qui est localisé de façon transversale par rapport à celui-ci.

6. Système (1) selon l'une quelconque des revendications précédentes, **caractérisé en ce qu'**il comprend un transpondeur passif (2) qui est intégré dans son manche (3) et qui est positionné de manière à lui être orthogonal.

7. Système pour surveiller l'utilisation d'outils à main (1) selon l'une quelconque des revendications précédentes, **caractérisé en ce que** le dispositif électronique pouvant être porté (5) comprend:

   - un moyen de signalisation et/ou d'avertissement (6) ;
   - au moins une batterie ;
   - une mémoire interne dans laquelle sont stockées à la fois les données d'identification de l'outil à main (1) et des utilisateurs, de même que les données qui sont collectées pendant l'utilisation dudit outil à main (1); et
   - un moyen de connexion (8) pour charger la batterie et pour la connecter à l'équipement informatique.

8. Système pour surveiller l'utilisation d'outils à main (1) selon la revendication 7, **caractérisé en ce que** le moyen de signalisation et/ou d'avertissement (6) comprend:

   - au moins une diode LED ou un écran d'affichage de données pour afficher une information visuelle ; et
   - un actionneur vibro-tactile pour transmettre une information haptique et pour alerter l'utilisateur en ce qui concerne différentes situations telles qu'une absence d'autorisation, une condition médiocre de l'outil à main et en option.

9. Système pour surveiller l'utilisation d'outils à main (1) selon l'une quelconque des revendications précédentes, **caractérisé en ce que** le dispositif électronique pouvant être porté (5) comprend au moins un capteur sélectionné parmi le groupe des capteurs de mouvement, des capteurs inertiels, des gyroscopes, des accéléromètres, des magnétomètres et des baromètres.

10. Système pour surveiller l'utilisation d'outils à main (1) selon l'une quelconque des revendications précédentes, **caractérisé en ce que** l'outil à main (1) est un outil de coupe à main.

11. Système pour surveiller l'utilisation d'outils à main (1) selon la revendication 10, **caractérisé en ce que** l'outil de coupe à main est un couteau.

12. Procédé de surveillance de l'utilisation d'outils à main (1) qui utilise le système selon les revendications 1 à 11, **caractérisé en ce qu'**il comprend les étapes suivantes :

   a. le choix d'un dispositif électronique pouvant être porté (5) par l'utilisateur et son positionnement au niveau de la main à l'aide de laquelle l'outil sera manipulé ;
   b. l'identification du dispositif électronique pouvant être porté (5) choisi à l'aide d'un transpondeur d'utilisateur personnel passif (7) de telle sorte que les deux soient liés dans la mémoire dudit dispositif électronique pouvant être porté (5) ;
   c. le choix d'un outil à main (1) par l'utilisateur et sa saisie à l'aide de la main au niveau de laquelle le dispositif électronique pouvant être porté (5) est positionné, de telle sorte que ce dernier lise le transpondeur passif (2) qui est intégré à l'intérieur de son manche (3), qu'il identifie ledit outil à main (1) par l'intermédiaire de son inventaire local et qu'il enregistre l'instant de connexion dans sa mémoire interne ;

d. la vérification d'autorisations d'utilisation et de besoins en termes de maintenance de l'outil à main (1) qui est sélectionné par le dispositif électronique pouvant être porté (5) par l'intermédiaire des données dans sa mémoire interne et la délivrance d'un signal d'avertissement par l'intermédiaire de son moyen de signalisation et/ou d'avertissement (6) si l'outil à main (1) ne peut pas être utilisé ;

e. s'il peut être utilisé, la vérification périodique par le dispositif électronique pouvant être porté (5) du fait qu'il peut lire un transpondeur passif (2) de l'outil à main (1), et l'enregistrement de l'instant de fin d'utilisation de l'outil à main (1) lorsque ce n'est pas possible ; et

f. la détection du mouvement par le dispositif électronique pouvant être porté (5) afin de détecter lorsque l'utilisateur l'a enlevé de telle sorte que, si ledit mouvement ne se produit pas pendant un temps spécifié, il ne soit plus associé au transpondeur d'utilisateur passif (7) dudit utilisateur et qu'il entre dans un mode de veille.

13. Procédé de surveillance d'outils selon la revendication 12, **caractérisé en ce que**, tant que l'outil à main (1) est en cours d'utilisation, le dispositif électronique pouvant être porté (5) enregistre ses données de mouvement.

14. Procédé de surveillance d'outils selon la revendication 12 ou 13, **caractérisé en ce que**, une fois que le travail est terminé, le dispositif électronique pouvant être porté (5) est connecté à un port de l'équipement informatique pour charger sa batterie et pour synchroniser sa mémoire interne avec l'équipement informatique, en déchargeant les données historiques et en mettant à jour l'inventaire local.

15. Procédé de surveillance d'outils selon la revendication 12 ou 13, **caractérisé en ce que**, une fois que le travail est terminé, le dispositif électronique pouvant être porté (5) est connecté à une base de charge qui, à son tour, est connectée à l'équipement informatique sans fil de telle sorte que le dispositif électronique pouvant être porté (5) synchronise sa mémoire interne avec l'équipement informatique en déchargeant les données historiques et en mettant à jour l'inventaire local.

**FIG.1**

# FIG.2

FIG.3

FIG.4

FIG.5

FIG.6

FIG.7

FIG.8

FIG.9

**EP 4 095 777 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160221198 A
- WO 0142991 A
- US 2019077003 A1